(19) **Europäisches Patentamt**

**European Patent Office**

**Office européen des brevets**

(11) **EP 1 099 104 B1**

(12) **EUROPÄISCHE PATENTSCHRIFT**

(45) Veröffentlichungstag und Bekanntmachung des Hinweises auf die Patenterteilung:
**04.09.2002 Patentblatt 2002/36**

(21) Anmeldenummer: **99927932.6**

(22) Anmeldetag: **09.06.1999**

(51) Int Cl.$^7$: **G01N 13/02**

(86) Internationale Anmeldenummer:
**PCT/EP99/03977**

(87) Internationale Veröffentlichungsnummer:
**WO 00/005564 (03.02.2000 Gazette 2000/05)**

(54) **IMBIBITIONSMESSGERÄT ZUR BESTIMMUNG DER BENETZBARKEIT VON PULVERN**

IMBIBITION MEASURING APPARATUS FOR DETERMINING POWDER WETTABILITY

APPAREIL DE MESURE D'IMBIBITION POUR DETERMINER LA MOUILLABILITE DE POUDRES

(84) Benannte Vertragsstaaten:
**AT BE CH DE DK ES FI FR GB GR IE IT LI LU MC NL PT SE**

(30) Priorität: **23.07.1998 DE 19833187**
**29.09.1998 DE 19844595**

(43) Veröffentlichungstag der Anmeldung:
**16.05.2001 Patentblatt 2001/20**

(73) Patentinhaber: **Fraunhofer-Gesellschaft zur Förderung der angewandten Forschung e.V. 80636 München (DE)**

(72) Erfinder:
• **SCHINDLER, Bernd**
**D-70569 Stuttgart (DE)**
• **RENZOW, Dieter**
**D-71277 Rutesheim (DE)**

(56) Entgegenhaltungen:
**US-A- 5 425 265**

• **SCHINDLER B ET AL: "Benetzungskinetik an Glaspulverschüttungen" CHEMIE INGENIEUR TECHNIK, MAY 1973, WEST GERMANY, Bd. 45, Nr. 9-10, Seiten 583-586, XP002117217 ISSN: 0009-286X in der Anmeldung erwähnt**
• **PATENT ABSTRACTS OF JAPAN vol. 010, no. 007 (P-419), 11. Januar 1986 (1986-01-11) & JP 60 162936 A (HOSOKAWA FUNTAI KOUGAKU KENKYUSHO:KK), 24. August 1985 (1985-08-24)**
• **BRUIL H G ET AL: "DETERMINATION OF CONTACT ANGLES OF AQUEOUS SURFACTANT SOLUTIONS ON POWDERS" COLLOID POLYM SCI JAN 1974, Bd. 252, Nr. 1, Januar 1974 (1974-01), Seiten 32-38, XP002117218 in der Anmeldung erwähnt**

## Beschreibung

Die vorliegende Erfindung betrifft eine Vorrichtung und ein Verfahren zur Bestimmung der Benetzbarkeit von Schüttgütern aus unterschiedlichen Materialien.

Die Ermittlung von Benetzungsdaten von pulverförmigen Materialien, zum Beispiel Polymerpulvern oder Polymergranulaten und/oder von oberflächenbehandelten Pulvern ist für eine Vielzahl von materialtechnologischen Aspekten von großer Bedeutung. Die Benetzungsdaten geben zum Beispiel Aufschluß über Quantität und Qualität der Oberflächenbehandlung sowie grundsätzlicher Eigenschaften der untersuchten Pulver und Granulate.

Aus Schindler und Sell, Chem. Ing. Tech. 45 (1973), 583 und Bruil, Colloid Polym. Sci. 252 (1974), 32 sind Imbibitions- beziehungsweise Ansaugverfahren für benetzungskinetische Untersuchungen an Pulvern bekannt. Die beschriebenen Verfahren berücksichtigen, daß sich bei Schüttgütern die bei der Bestimmung der Benetzbarkeit von Materialien üblicherweise ermittelten Randwinkel nur ausgesprochen schlecht ermitteln lassen, da aufgesetzte Meßflüssigkeitstropfen im Schüttgut versickern. Dies gilt im allgemeinen auch dann, wenn aus Pulvern Preßlinge hergestellt werden und an darauf aufgebrachten Tropfen die Randwinkel vermessen werden sollen. Die beschriebenen Verfahren messen daher nicht den Randwinkel, sondern verfolgen statt dessen den Eindringvorgang der Meßflüssigkeit in das Schüttgut. Der Eindringvorgang beruht auf den zwischen Meßflüssigkeit und Schüttgut auftretenden Kapillarkräften. Gemäß den beschriebenen Verfahren wird das Schüttgut, zum Beispiel das Pulver, in ein mit einem feinmaschigen Netz abgeschlossenes Rohr gefüllt und mit der Meßflüssigkeit in Kontakt gebracht. Durch die Kapillarkräfte wird die Meßflüssigkeit in das Pulver oder Kornhaufwerk eingesaugt. Dabei wird das Gewicht der angesaugten Flüssigkeitsmenge in Abhängigkeit von der Eindringzeit bestimmt. Die Antriebskraft für das Eindringen ist die Benetzungsspannung, also das Produkt aus Oberflächenspannung und dem Cosinus des Randwinkelwertes. Solange eine volle Benetzung vorliegt, das heißt der Randwinkel 0° beträgt, wird mit steigender Oberflächenspannung der Meßflüssigkeit auch die Eindringgeschwindigkeit größer. Wird die Oberflächenspannung weiter vergrößert und es treten aufgrund unvollständiger Benetzung Randwinkel auf, nimmt die Benetzungsspannung ab und die Eindringgeschwindigkeit verringert sich. Aus diesen Daten, die mit einer Reihe von Meßflüssigkeiten steigender Oberflächenspannung zu ermitteln sind, werden gemäß des Standes der Technik Werte zur Benetzbarkeit des untersuchten Kornhaufwerks ausgerechnet.

Als nachteilig erweist sich bei dieser Vorgehensweise, daß, sobald das Kornhaufwerk nicht mehr durch die Meßflüssigkeit vollständig benetzt wird und demgemäß Randwinkel aufteten, beim Eindringen der Meßflüssigkeit in das Kornhaufwerk in deren Zwickelvolumina vermehrte Gaseinschlüsse auftreten, die die Messung fehlerhaft beeinflussen.

Das der vorliegenden Erfindung zugrundeliegende technische Problem besteht also darin, eine Vorrichtung und ein Verfahren zur Bestimmung der Benetzbarkeit von Schüttgütern bereitzustellen, welches die Nachteile des Standes der Technik überwindet, insbesondere eine präzisere Messung mit einfachen Mitteln ermöglicht.

Die vorliegende Erfindung löst dieses Problem durch die Bereitstellung einer Vorrichtung zur Bestimmung der Benetzbarkeit von Schüttgütern mit mindestens einer Meßflüssigeit, umfassend eine Schüttgutaufnahme, eine Aufnahme für die Meßflüssigkeit und eine Einrichtung zur Ermittlung der Gewichtszunahme des Schüttgutes durch die aufgenommene Meßflüssigkeit, wobei die Schüttgutaufnahme und die Aufnahme für die Meßflüssigkeit gemeinsam in einer Vakuumkammer angeordnet sind. Die Erfindung löst dieses Problem auch durch die Bereitstellung eines Verfahrens zur Bestimmung der Benetzbarkeit von Schüttgütern mit mindestens einer Meßflüssigkeit, wobei das Schüttgut der Meßflüssigkeit unter Vakuum ausgesetzt, die Gewichtszunahme des Schüttgutes aufgrund der vom Schüttgut aufgenommenen Meßflüssigkeit bestimmt und die Benetzbarkeit des Schüttgutes rechnerisch ermittelt wird. Insbesondere kann auch vorgesehen sein, Daten zur Benetzbarkeit des Schüttgutes zu erhalten, indem mehrere verschiedene, insbesondere organische Flüssigkeiten eingesetzt werden. Erfindungsgemäß einsetzbare Meßflüssigkeiten sind zum Beispiel Heptan, Decan, Dioxan oder Dimethylformamid.

Die erfindungsgemäß vorgesehene Vorgehensweise, die Gewichtszunahme des Schüttgutes aufgrund des Eindringens der Meßflüssigkeit unter Vakuum beziehungsweise unter vermindertem Druck zu bestimmen, hat den Vorteil, daß die unerwünschten, die Messung fehlerhaft beeinflussenden Gaseinschlüsse vermieden werden. Das erfindungsgemäße Verfahren und die erfindungsgemäße Vorrichtung erlauben daher eine präzisere Bestimmung der Benetzbarkeit von Schüttgütern. Dies wird insbesondere dadurch erreicht, daß die Bestimmung in Abwesenheit von Permanentgas nur unter dem der Meßflüssigkeit eigenen Dampfdruck durchgeführt wird.

Das erfindungsgemäße Verfahren und die erfindungsgemäße Vorrichtung mißt die freiwillige Flüssigkeitsaufnahme von Schüttgütern unter dem Einfluß der Benetzungsspannung, also dem Produkt aus Oberflächenspannung $\gamma$ und dem Cosinus des Randwinkels $\upsilon$. Die ermittelten Meßdaten werden mit einem Rechner erfaßt und weiterverarbeitet. Die dabei erhaltenen Ergebnisse erlauben Rückschlüsse über die Bestimmung der Benetzbarkeit von Schüttgütern. Die Bestimmung der Benetzbarkeit erfolgt dabei über eine Bestimmung der Gewichts-Zeit-Abhängigkeit folgendermaßen:

$$\frac{m^2}{t} = C \cdot \frac{\rho^2 \cdot \gamma \cdot \cos \upsilon}{\eta} \quad \text{(Gleichung x)}$$

wobei

m:     Masse der angesaugten Flüssigkeitsmenge
t:      Zeit
$\eta$:     Viskosität der Flüssigkeit
$\rho$:     Dichte der Flüssigkeit
$\gamma$:     Oberflächenspannung der Flüssigkeit
$\upsilon$:     Randwinkel zwischen Flüssigkeit und Pulver
C:     Faktor, abhängig von den geometrischen Eigenschaften des Pulvers und des Probenrohres ist.

Der Faktor C wird mit Flüssigkeiten bestimmt, die das Pulver voll benetzen (Randwinkel $\upsilon = 0°$). Mit schlecht benetzenden Flüssigkeiten werden Randwinkel bestimmt.

Die erfindungsgemäße Verfahrensweise und die erfindungsgemäße Vorrichtung sind vorteilhafterweise insbesondere geeignet zur Messung der Imbibitionsgeschwindigkeit von Flüssigkeiten in Kornhaufwerken, bei der Ermittlung von Benetzungsdaten an Polymerpulvern, Polymergranulaten und anderen pulverförmigen Feststoffen (Kornhaufwerken) und bei der Überwachung der Produktion von oberflächenbehandelten Pulvern. Insbesondere erlaubt die Analyse der erfindungsgemäß gewonnenen Meßresultate Aussagen über die Pulververschüttung bezüglich der Randwinkel verschiedener Flüssigkeiten an Pulvern und porösen Körpern, der Oberflächenspannung des Pulvers oder porösen Körpers, des Kapillarradius und des Porenvolumens. Diese Größen stellen wichtige Parameter für die Entwicklung von Pulvern und Pulverbeschichtungen dar. Darüber hinaus kann das erfindungsgemäße Verfahren zur Ein- und Ausgangskontrolle von Pulvern verwendet werden.

Im Zusammenhang mit der vorliegenden Erfindung wird unter einem Schüttgut ein Gut aus einer Vielzahl von kleineren Einzeleinheiten verstanden, die jeweils nicht fest miteinander verbunden sind, und das in aufgeschütteter Form Zwischenräume zwischen den Einzeleinheiten bildet. Schüttgüter sind beispielsweise Pulver, wie Polymerpulver oder oberflächenbehandelte Pulver, Granulate, zum Beispiel Polymergranulate, und ganz allgemein sogenannte Kornhaufwerke.

Im Zusammenhang mit der vorliegenden Erfindung wird unter einem Vakuum ein leerer Raum, insbesondere ein abgeschlossenes Raumgebiet verstanden, in dem ein erheblich geringerer Druck als der normale Luftdruck herrscht, beispielsweise ein Druck von $10^5$ bis $10^4$ Pascal, vorteilhafterweise ein Druck von $10^4$ bis 100 Pascal, besonders bevorzugt ein Druck von 100 bis 0,1 Pascal, insbesondere ein Druck von 0,1 bis $10^{-4}$ Pascal und besonders bevorzugt ein Druck von unter $10^{-4}$ Pascal.

In besonders bevorzugter Ausführungsform der Erfindung befindet sich auch die Einrichtung zur Ermittlung der Gewichtszunahme, die insbesondere als Kraftaufnehmer ausgebildet sein kann, in der Vakuumkammer. Diese Ausführungsform ist jedoch nicht zwingend notwendig, da von großer Bedeutung für die Erfindung lediglich ist, daß der Eindringvorgang der Meßflüssigkeit in das zu untersuchende Schüttgut unter Vakuum stattfindet.

In einer vorteilhaften Ausgestaltung der Erfindung ist vorgesehen, daß die Schüttgutaufnahme als ein mit einem feinmaschigen Netz oder Gitter abgeschlossener, vorzugsweise zylindrischer, Hohlkörper, zum Beispiel als ein Rohr, ausgeführt ist.

Die Erfindung sieht in einer weiteren Ausgestaltung vor, daß die Aufnahme für die Meßflüssigkeit als thermostatisierbarer Behälter, zum Beispiel als Glasschale, ausgeführt ist.

Gemäß einer besonders bevorzugten Variante der erfindungsgemäßen Vorrichtung ist die Aufnahme für die Meßflüssigkeit auf einem mittels einer Motor-Getriebeeinheit höhenverstellbaren Hebetisch angeordnet. Die Aufnahme für die Meßflüssigkeit mit der darin enthaltenen Meßflüssigkeit kann demgemäß von unten mit einem motorisch angetriebenen Hebetisch an die in vorzugsweiser Ausgestaltung an die Einrichtung zur Ermittlung der Gewichtszunahme angehängte Schüttgutaufnahme herangefahren werden, bis der Meßflüssigkeitsmeniskus am unteren, das heißt der Meßflüssigkeit zugewandten, Ende der Schüttgutaufnahme anspringt. Ab diesem Zeitpunkt dringt Meßflüssigkeit in das Schüttgut ein und wird die Gewichtszunahme durch die in das Schüttgut eindringende Meßflüssigkeit als Funktion der Zeit registriert. Die Meßwerte werden mit einem Rechner erfaßt und gemäß des oben beschriebenen Algorithmuses weiterverarbeitet.

In einer anderen Ausgestaltung der Erfindung ist vorgesehen, daß nicht die Aufnahme für die Meßflüssigkeit an die mit der Einrichtung zur Ermittlung der Gewichtszunahme gekoppelte Schüttgutaufnahme, sondern umgekehrt die mit der Einrichtung zur Ermittlung der Gewichtszunahme gekoppelte Schüttgutaufnahme höhenverstellbar ist, das heißt an die Aufnahme für die Meßflüssigkeit herangeführt wird. Dazu ist die Einrichtung zur Ermittlung der Gewichtszunahme als Vorschubeinheit mit einer Motor-Getriebeeinheit gekoppelt, so daß die mit der Einrichtung zur Ermittlung der Gewichtszunahme verbundene, vorzugsweise daran angehängte Schüttgutaufnahme motorisch angetrieben von oben an die mit Meßflüssigkeit gefüllte Aufnahme für die Meßflüssigkeit herangefahren wird, bis der Meßflüssigkeitsmeniskus an der Schüttgutaufnahme anspringt und die Gewichtszunahme registriert werden kann.

In beiden vorgenannten Ausführungsformen kann der Antrieb der Höhenverstellung natürlich auch manuell, ohne Einsatz eines Motors, durchgeführt werden, so daß die Vorrichtung ohne Motor kostengünstiger hergestellt werden kann.

Selbstverständlich ist es auch erfindungsgemäß vorgesehen, daß sowohl die Schüttgutaufnahme als auch die Aufnahme für die Meßflüssigkeit jeweils motorgetrieben oder manuell höhenverstellbar sind und aufeinander zu bewegt werden können.

In einer weiteren vorteilhaften Ausgestaltung der Erfindung ist vorgesehen, die Vakuumkammer als Glashaube auszuführen. Es kann aber auch vorgesehen sein, die Vakuumkammer als einen eine Tür aufweisenden Vakuumkasten auszubilden. Selbstverständlich sind die beiden vorbeschriebenen Varianten der Höhenverstellbarkeit für die Aufnahme der Meßflüssigkeit und/oder für die Schüttgutaufnahme, das heißt die Variante, in der die Schüttgutaufnahme als Vorschubeinheit mit einer Motor-Getriebeeinheit gekoppelt ist und die Variante, in der die Aufnahme für die Meßflüssigkeit als Vorschubeinheit mit einer Motor-Getriebeeinheit ausgeführt ist, innerhalb eines mit einer Tür abgedichteten Vakuumkastens ausführbar.

Weitere vorteilhafte Ausgestaltungen der Erfindung ergeben sich aus den Unteransprüchen.

Die Erfindung wird anhand von Ausführungsbeispielen und zugehöriger Figuren näher erläutert.

Die Figuren zeigen:

Figur 1 einen Längsschnitt durch eine erfindungsgemäße Vorrichtung,

Figur 2 einen Längsschnitt durch eine andere Ausführungsform einer erfindungsgemäßen Vorrichtung,

Figur 3 einen Längsschnitt durch eine weitere Ausführungsform der erfindungsgemäßen Vorrichtung mit einem Vakuumkasten,

Figur 4 eine graphische Darstellung der Zeitabhängigkeit des Einbringens von Dioxan in eine Polyethylen (PE) -Pulververschüttung bei Normaldruck,

Figur 5 eine graphische Darstellung der Zeitabhängigkeit des Einbringens von Dioxan in eine Polyethylen (PE) -Pulververschüttung im Vakuum (bei 100 mbar),

Figur 6 eine Gewichts-Zeit-Kurve für Dioxan und Polyethylen-Pulver bei Normaldruck zur Ermittlung der Steigung,

Figur 7 eine Gewichts-Zeit-Kurve für Dioxan und Polyethylen-Pulver im Vakuum (100 mbar) zur Ermittlung der Steigung,

Figur 8 eine graphische Darstellung von Ansaugparametern von Polyethylen-Pulver als Funktion von $\gamma_L$ (gemessen bei Normaldruck) und

Figur 9 eine graphische Darstellung von Ansaugparametern von Polyethylen-Pulver als Funktion von $\gamma_L$ (gemssen bei 100 mbar).

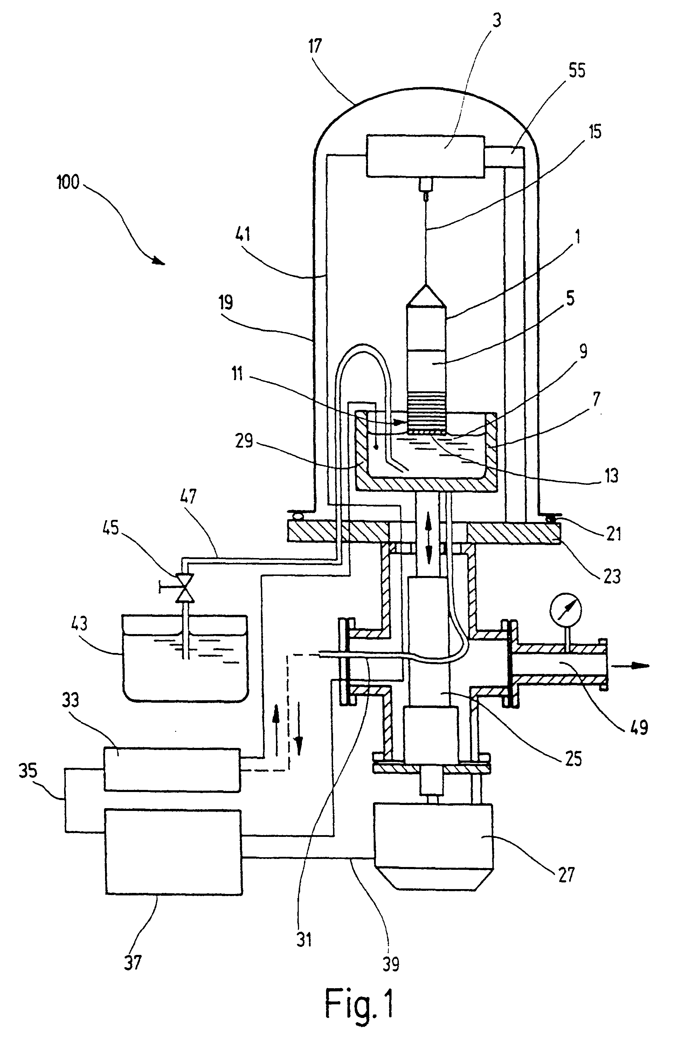

Die Figur 1 zeigt eine Vorrichtung 100 zur Bestimmung der Benetzbarkeit von Schüttgütern, umfassend eine Schüttgutaufnahme 1, eine Einrichtung 3 zur Ermittlung der Gewichtszunahme des in der Schüttgutaufnahme 1 befindlichen Schüttgutes 5 und eine Aufnahme 7 für die Meßflüssigkeit 9. Die Schüttgutaufnahme 1 ist als zylindrisches Rohr ausgeführt, das meßflüssigkeitsseitig an seinem unteren Ende 11 mit einem feinmaschigen Netz 13 abgeschlossen ist. Die Schüttgutaufnahme 1 ist mittels eines Fadens oder Drahts 15 mit der als Kraftaufnehmer ausgeführten und an einem in der Vakuumkammer befindlichen Träger 55 befestigten Einrichtung 3 für die Ermittlung der Gewichtszunahme des Schüttgutes 5 verbunden, und zwar an die Einrichtung 3 gehängt. Die Schüttgutaufnahme 1 mit dem darin befindlichen Schüttgut 5 und die Aufnahme 7 für die Meßflüssigkeit 9 mit der darin enthaltenen Meßflüssigkeit 9 sind in einer vakuumierbaren Vakuumkammer 17 angeordnet, welche als eine über eine Dichtung 21 mit einem Bodenteil 23 verbundene Glashaube 19 ausgeführt ist.

Die Aufnahme 7 für die Meßflüssigkeit 9 ist höhenverstellbar über ein Verbindungsteil 25 als Vorschubeinheit mit einer Motor-Getriebeeinheit 27 ausgeführt. Der Figur 1 kann auch entnommen werden, daß die Aufnahme 7 für die Meßflüssigkeit 9 nicht direkt mit dem Verbindungsteil 25 verbunden ist, sondern vielmehr in einem Hebetisch 29 mit Badthermostatisierung angeordnet ist. Der thermostatisierbare Hebetisch 29 ist über eine Zuleitung 31 mit einem Thermostaten 33 verbunden. Der Thermostat 33 ist über eine Leitung 35 mit einer Steuer- und Auswerteeinheit 37 verbunden, die auch Verstärkerfunktion aufweisen kann. Die Steuer- und Auswerteeinheit 37 ist ferner mit der Motor-Getriebeeinheit 27 über eine Leitung 39 und mit der Einrichtung 3 für die Gewichtszunahme über eine Leitung 41 verbunden.

Die Figur 1 stellt auch dar, daß die Meßflüssigkeit 9 aus einem außerhalb der Vakuumkammer 17 angeordneten Vorratsgefäß 43 der Aufnahme 7 für die Meßflüssigkeit 9 innerhalb der Vakuumkammer 17 zugeleitet wird. Dies geschieht über eine mit einem Ventil 45 versehenen Zuleitung 47.

Dargestellt ist ferner ein Leitungssystem 49 zur Erzeugung des Vakuums, das mit einer nicht dargestellten Vakuumpumpe verbunden ist.

Die Funktionsweise der Vorrichtung 100 stellt sich wie folgt dar:

Das zu untersuchende Schüttgut 5 wird in bestimmter Menge außerhalb der Vorrichtung 100 in die zylindrische Schüttgutaufnahme 1 geschüttet, die an ihrem meßflüssigkeitsseitigen Ende 11 mit einem feinmaschigen Netz 13 abgeschlossen ist. Nach dem Einfüllen wird das Schüttgut gerüttelt und verdichtet, um ein möglichst gleichmäßiges Kornhaufwerk zu erhalten. Die gefüllte Schüttgutaufnahme 1 wird dann an die Einrichtung 3 für die Ermittlung der Gewichtszunahme, also den Kraftaufnehmer, in die Vorrichtung 100 gehängt. Die Einrichtung 3 für die Ermittlung der Gewichtszunahme des Schüttgutes 5 durch die eindringende Meßflüssigkeit 9 ist also ebenso wie die Aufnahme 7 für die Meßflüssigkeit 9 und die Schüttgutaufnahme 1 innerhalb der Vakuumkammer 17 angeordnet.

Die Messung wird in der Vakuumkammer 17 durchgeführt. Dazu wird die Meßflüssigkeit 9 aus einem außerhalb der Vakuumkammer 17 befindlichen Vorratsgefäß 43 in die Aufnahme 7 für die Meßflüssigkeit 9 innerhalb der Vakuumkammer 17, geregelt über ein Ventil 45 und über eine Leitung 47, geführt. Innerhalb der Vakuumkammer 17 wird durch Abpumpen über das Zuleitungssystem 49 ein Vakuum erzeugt. Die Meßflüssigkeit 9 bildet in der Vakuumkammer 17 ihren Dampfdruck aus. Die sich in dem Hebetisch 29 befindende Aufnahme 7 für die Meßflüssigkeit 9 wird nun motorisch angetrieben von unten an die am Kraftaufnehmer 3 hängende Schüttgutaufnahme 1 herangefahren, bis der Meßflüssigkeitsmeniskus am meßflüssigkeitsseitigen Ende 11 der Schüttgutaufnahme 1 anspringt. Die Meßflüssigkeit beginnt nun aus der Aufnahme 7 in das Schüttgut 5 einzudringen. Ab diesem Zeitpunkt wird die Gewichtszunahme des sich in der Schüttgutaufnahme 1 befindlichen Schüttguts 5 durch die in das Schüttgut 5 eindringende Meßflüssigkeit 9 vom Kraftaufnehmer 3 als Funktion der Zeit registriert. Die Meßwerte werden mittels der Steuer- und Auswerteeinheit 37 erfaßt und weiterverarbeitet. Vorteilhafterweise können Meßflüssigkeiten unterschiedlicher Eigenschaften zur Bestimmung der Benetzbarkeit des Schüttgutes 5 verwendet werden, wobei der Thermostat 33 sicherstellt, daß eine konstante Temperatur eingehalten wird, die zur Ausbildung eines konstanten Dampfdrucks notwendig ist.

Im folgenden werden bau- und funktionsgleiche Elemente mit gleichen Bezugszeichen versehen.

Beispiel 2

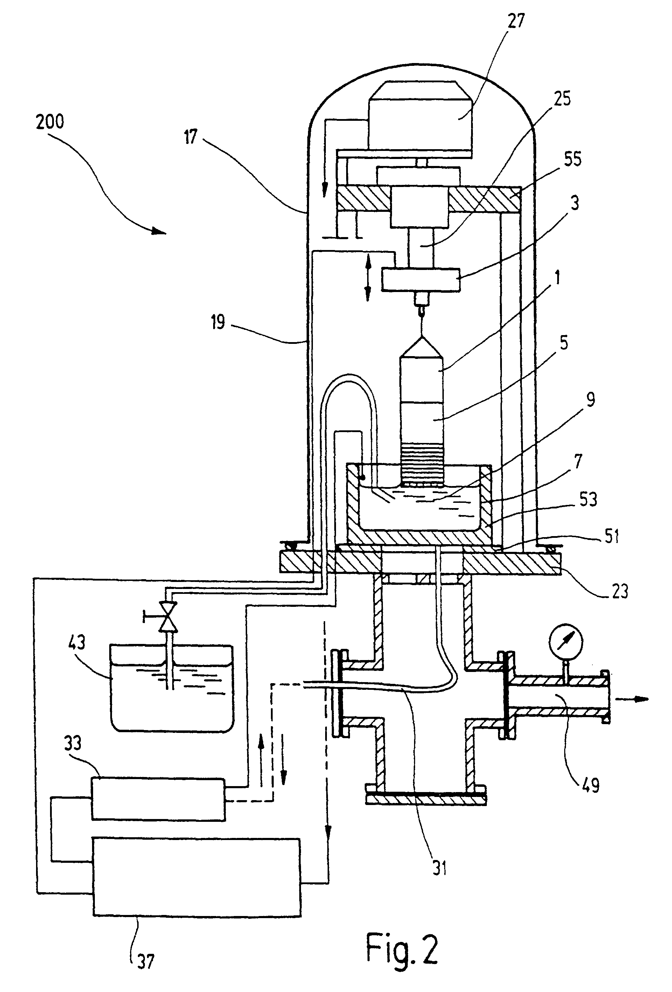

Die in Figur 2 dargestellte Vorrichtung 200 umfaßt ebenfalls eine Einrichtung 3 für die Ermittlung der Gewichtszunahme eines in einer Schüttgutaufnahme 1 angeordneten Schüttguts 5. Die Schüttgutaufnahme 1 befindet sich ebenso wie die Aufnahme 7 für die Meßflüssigkeit 9 innerhalb der als Glashaube 19 ausgeführten Vakuumkammer 17.

In Abweichung von der in Figur 1 dargestellten Vorrichtung 100 ist die Aufnahme 7 für die Meßflüssigkeit 9 jedoch nicht in einem höhenverstellbaren Hebetisch, sondern statt dessen in einer fest auf der Isolierauflage 51 des Bodenteils 23 der Vakuumkammer 17 angeordneten Thermostataufnahme 53 angeordnet. Höhenverstellbar angeordnet ist dagegen die Einrichtung 3 für die Ermittlung der Gewichtszunahme, die als Vorschubeinheit über ein Verbindungsteil 25 mit einer oberhalb der Einrichtung 3 für die Ermittlung der Gewichtszunahme angeordneten Motor- und Getriebeeinheit 27 gekoppelt ist. Die Schüttgutaufnahme 1 ist an die Einrichtung 3 gehängt. Die Motor- und Getriebeeinheit 27 ist ebenso wie die Einrichtung 3 für die Ermittlung der Gewichtszunahme an einem innerhalb der Vakuumkammer 17 angeordneten Träger 55 befestigt. Die Motor- und Getriebeeinheit 27 befindet sich demgemäß ebenfalls, ebenso wie die Einrichtung 3 für die Ermittlung der Gewichtszunahme, die Aufnahme 7 für die Meßflüssigkeit 9 und die Schüttgutaufnahme 1, innerhalb der Vakuumkammer 17.

Die Funktionsweise der Vorrichtung 200 entspricht in Grundzügen der der Vorrichtung 100. In Abweichung von der Funktionsweise der Vorrichtung 100 wird hier jedoch nicht die Aufnahme 7 für die Meßflüssigkeit 9 von unten an die Schüttgutaufnahme 1 herangefahren, sondern vielmehr umgekehrt die Schüttgutaufnahme 1 von oben an die Oberfläche der Meßflüssigkeit 9 herabgesenkt, bis der Meniskus der Meßflüssigkeit 9 an das meßflüssigkeitsseitige Ende 11 der Schüttgutaufnahme 11 heranspringt und die Messung beginnen kann.

Beispiel 3

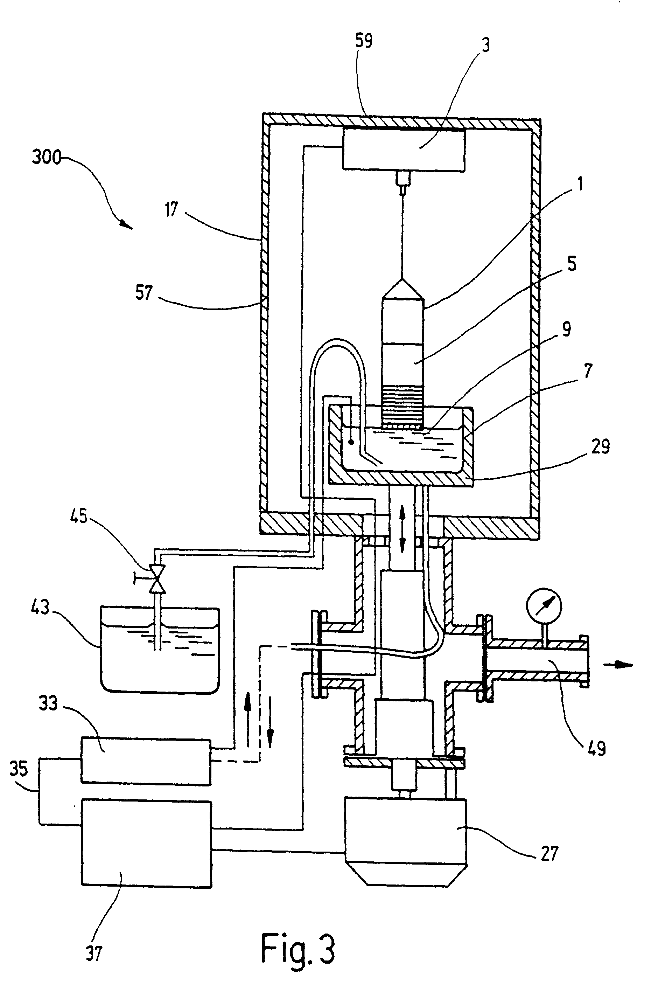

Die Figur 3 stellt die Vorrichtung 300 dar, die der Vorrichtung 100 der Figur 1 entspricht, wobei sich der Meßaufbau jedoch nicht in einer Glashaube 19, sondern einem Vakuumkasten 57 befindet. Der Vakuumkasten 57 weist eine nicht dargestellte Tür auf, ist vakuumdicht und thermostatisierbar. Die Einrichtung 3 für die Ermittlung der Gewichtszunahme ist an der unteren Seite der Decke 59 des Vakuumkastens 57 befestigt.

Die Funktionsweise entspricht der der Vorrichtung 100.

Selbstverständlich ist es möglich, auch den Meßaufbau gemäß der Vorrichtung 200 aus Figur 2 innerhalb eines Vakuumskastens 57 gemäß der Figur 3 auszuführen.

Beispiel 4

Messung und Auswertung der Imbibitionen mehrerer organischer Flüssigkeiten in Polyethylen (PE)-Pulververschüttungen mit vermindertem Druck und Vergleich mit den Ergebnissen von Experimenten bei Normaldruck

Methode

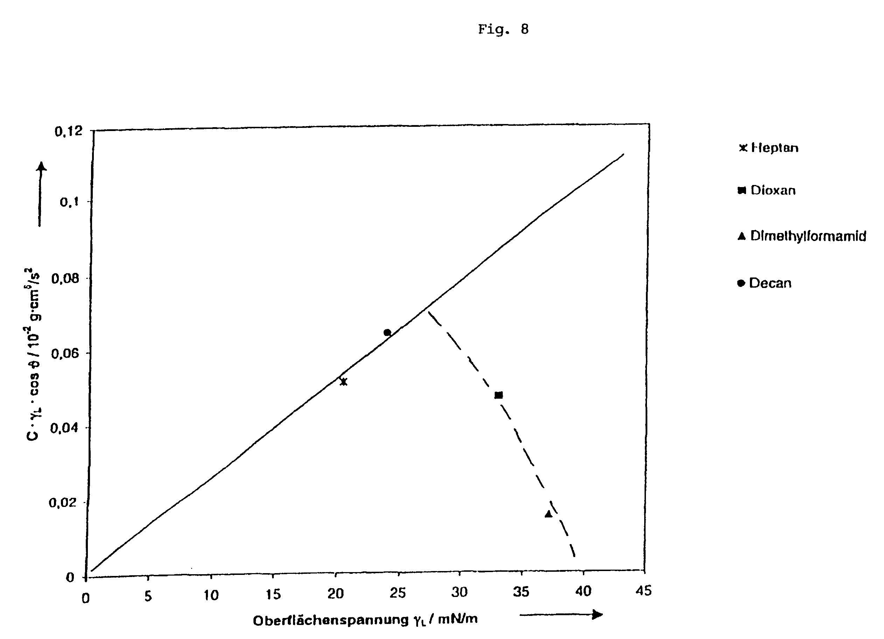

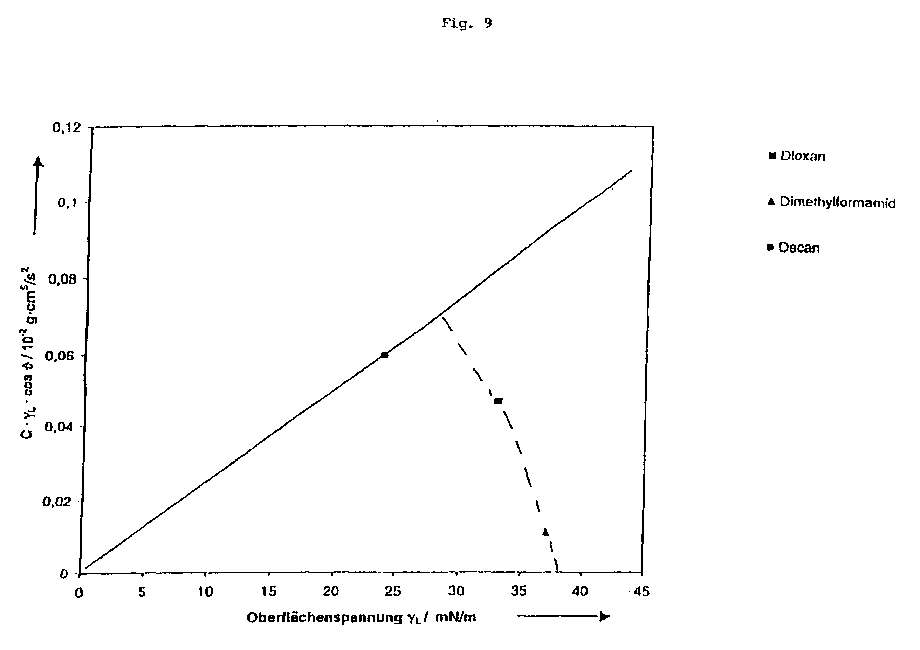

Die Imbibition von verschiedenen Flüssigkeiten unter dem Einfluß ihrer Oberflächenspannung in Pulververschüttungen kann mit einer gravimetrischen Messung zeitabhängig registriert werden. Wenn man die registrierten Massenwerte mit den jeweiligen spezifischen Dichten und Viskositäten der Messflüssigkeiten normiert, dann lassen sich die normierten Werte als Funktion der spezifischen Oberflächenspannung der Flüssigkeit $\gamma_L$ gemeinsam in einem Graphen darstellen. Für eine Schüttung liegen diese Werte in einem Koordinatensystem mit der Variablen $\gamma_L$ und dem Funktionswert ($C \cdot \gamma_L \cdot \cos \upsilon$) für alle voll benetzenden Flüssigkeiten auf einer Geraden. Die normierten Massenaufnahmewerte nicht voll benetzender Flüssigkeiten mit einem Randwinkel $\upsilon$ und damit $\cos \upsilon$ <1 weichen von dieser Geraden ab. Der Beginn dieser Abweichung markiert die Stelle, an der die spezifische Oberflächenspannung der Meßflüssigkeit gleich der spezifischen Oberflächenspannung des Pulvermaterials ist (siehe Figuren 8 und 9).

Die Parameter der eingesetzten Meßflüssigkeiten Heptan, Decan, Dioxan und Dimethylformamid sowie die Ansaugparameter an Polyethylen-Pulver ergeben sich aus folgender Tabelle:

Tabelle

| Parameter der Meßflüssigkeiten und Ansaugparameter an PE-Pulver | | | | | |
|---|---|---|---|---|---|
| Meßtemperatur: 20°C | | | | | |
| | Dichte | Viskosität | Oberflächen-Spannung | | Randwinkel |
| | $\rho$ [g/cm$^3$] | $\eta$ [mPa·s] | $\gamma_L$ [mN/n] | $C \cdot \gamma_L \cdot \cos \upsilon$ [10$^{-2}$ g·cm$^5$/s$^2$] | $\upsilon_V$ [°] |
| Messung bei Normaldruck: | | | | | |
| Heptan | 0,684 | 0,41 | 20,4 | 0,051221957 | |
| Decan | 0,730 | 0,92 | 23,9 | 0,064308501 | |
| C-Wert | 0,002600806 mit Heptan und Decan | | | | |
| Dioxan | 1,034 | 1,23 | 33,0 | 0,047110525 | 55° |
| Dimethylformamid | 0,949 | 1,28 | 37,1 | 0,015065495 | 81° |
| Messung im Vakuum (100 mbar) : | | | | | |
| Decan | 0,730 | 0,92 | 23,9 | 0,059819854 | |
| C-Wert | 0,002502923 mit Decan | | | | |
| Dioxan | 1,034 | 1,23 | 33,0 | 0,046822915 | 55° |
| Dimethylformamid | 0,949 | 1,28 | 37,1 | 0,011228058 | 83° |

Messung

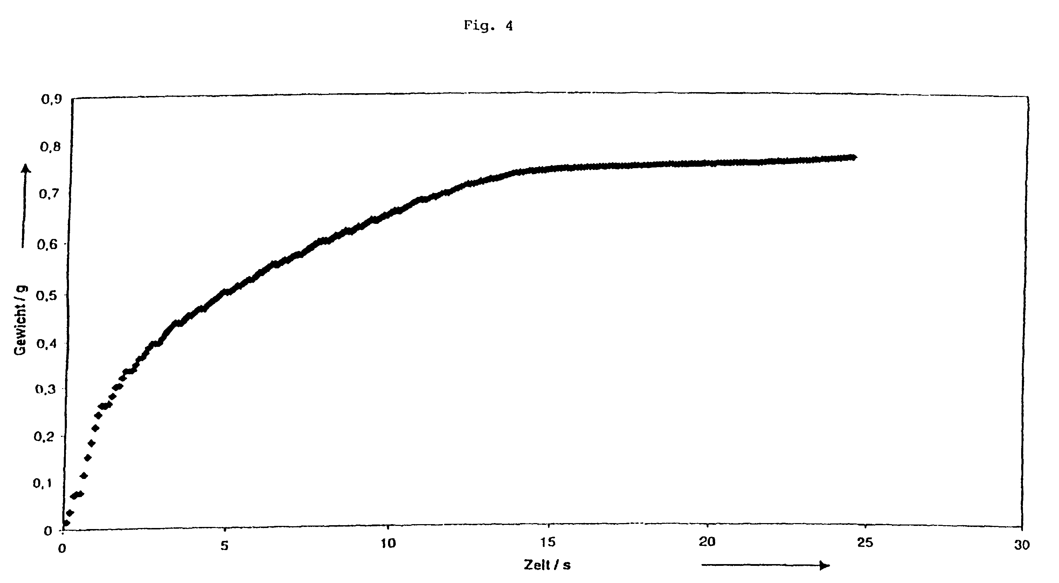

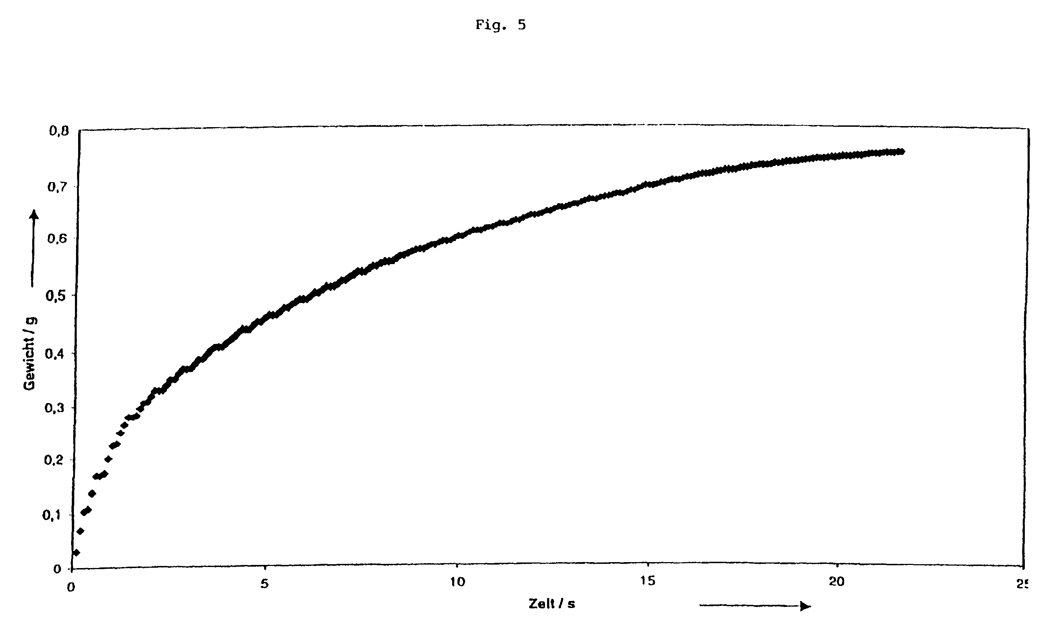

Wird das Probenrohr (1) mit dem Schüttgut (5) mit der Meßflüssigkeit (9) in Kontakt gebracht, so springt beim Berühren der Flüssigkeitsoberfläche ein Meniskus an und der Eindringvorgang der Flüssigkeit in die Schüttung beginnt. Das Gewicht der in die Schüttung eindringenden Flüssigkeit wird in Abhängigkeit von der Zeit registriert und in Graphen dokumentiert (siehe Figuren 4 und 5).

Auswertung

Zu mehreren Zeitpunkten $t_i$ entnimmt man diesen Meßkurven den zugehörigen Wert der Flüssigkeitmenge

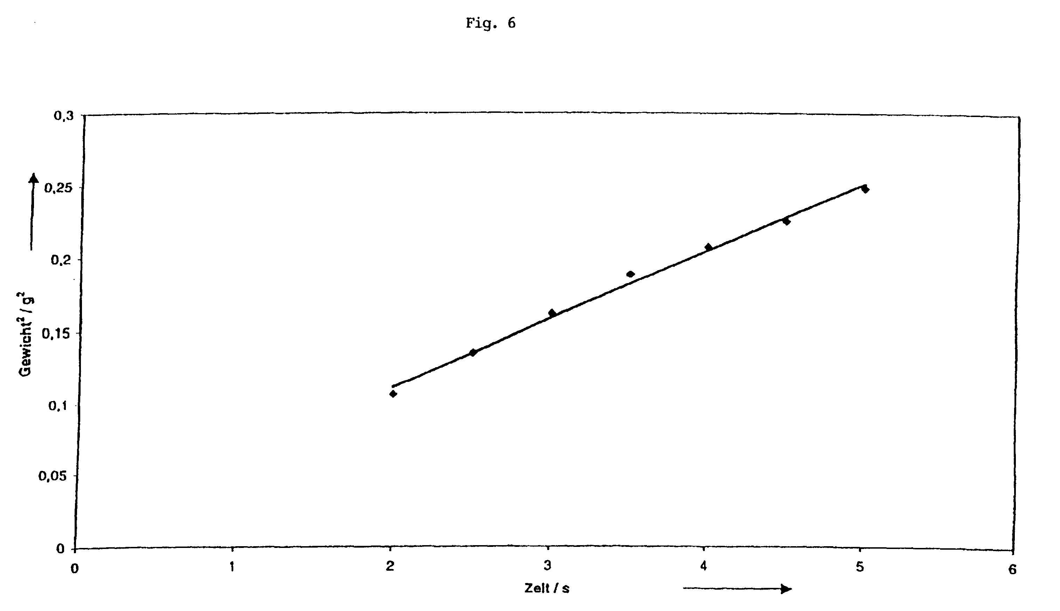

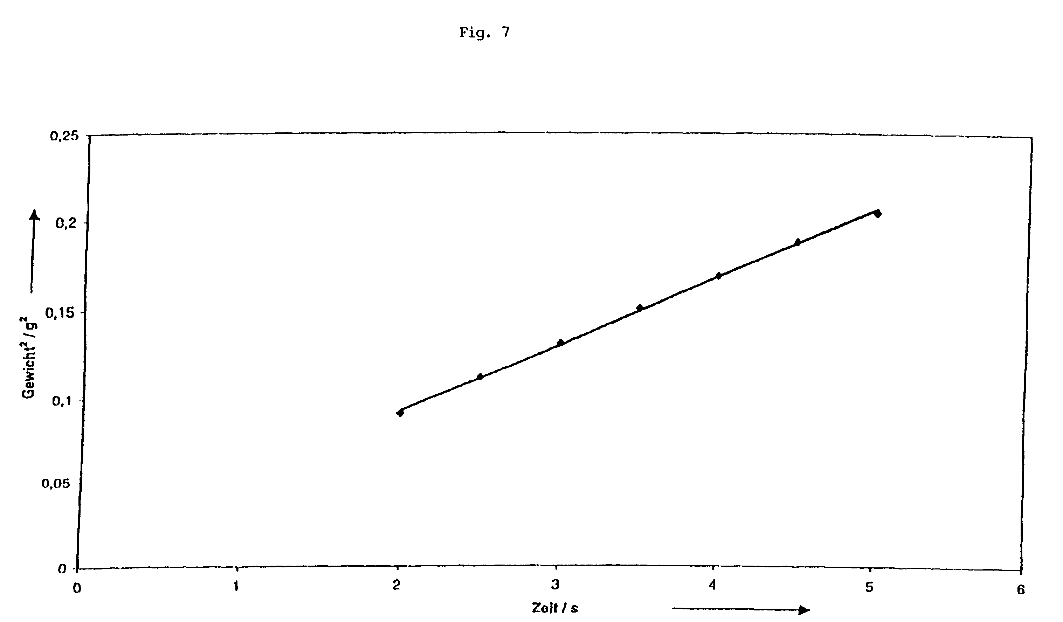

$m_i$. Die Auftragung von $m_i^2$ gegen $t_i$ in Graphen (Figuren 6 und 7) werden vorgenommen, um zu zeigen, wie der von Gleichung (x) behauptete Zeitverlauf der Massenaufnahme während der Messung erfüllt wird. Es sollen sich Geraden mit den Steigungen $\tan \alpha = C \cdot \cos \upsilon \cdot \rho^2 \cdot \gamma_L/\eta$ (mit Dichte $\rho$, Viskosität $\eta$ und spezifische Oberflächesapnnung $\gamma_L$ der Meßflüssigkeit) ergeben.

Für die Meßflüssigkeit Dioxan zeigt diese Auswertung an PE-Pulver für den Imbibitionsvorgang bei Normaldruck höhere Abweichungen (Figur 6) vom behaupteten Funktionszusammenhang als bei der Auswertung der Experimente bei vermindertem Druck (Figur 7).

Lufteinschlüsse sind die Ursache für den unregelmäßigeren Imbibitionsvorgang. Sie haben um so größeren Einfluß haben, je unregelmäßiger die Pulverteilchen sind und je größer ihre Rauhigkeit ist. Besonders in diesen Fällen empfiehlt sich die erfindungsgemäße Messung bei vermindertem Druck beziehungsweise Vakuum.

## Patentansprüche

1. Vorrichtung zur Bestimmung der Benetzbarkeit von Schüttgütern, umfassend eine Schüttgutaufnahme (1), eine Aufnahme (7) für eine Meßflüssigkeit (9), eine Einrichtung (3) für die Ermittlung der Gewichtszunahme des Schüttgutes (5) durch die aufgenommene Meßflüssigkeit (9), **dadurch gekennzeichnet, daß** die Schüttgutaufnahme (1) und die Aufnahme (7) für die Meßflüssigkeit (9) gemeinsam in einer Vakuumkammer (17) angeordnet sind.

2. Vorrichtung nach Anspruch 1, **dadurch gekennzeichnet, daß** die Einrichtung (3) für die Ermittlung der Gewichtszunahme in der Vakuumkammer (17) angeordnet ist.

3. Vorrichtung nach einem der vorhergehenden Ansprüche, **dadurch gekennzeichnet, daß** die Aufnahme (7) für die Meßflüssigkeit (9) auf einem mittels einer Motor-Getriebeeinheit (27) höhenverstellbaren Hebetisch (29) angeordnet ist.

4. Vorrichtung nach einem der vorhergehenden Ansprüche, **dadurch gekennzeichnet, daß** die Schüttgutaufnahme (1) und/oder die Einrichtung (3) für die Ermittlung der Gewichtszunahme als Vorschubeinheit mit einer Motor-Getriebeeinheit (27) gekoppelt ist.

5. Vorrichtung nach einem der vorhergehenden Ansprüche, **dadurch gekennzeichnet, daß** die Aufnahme (7) für die Meßflüssigkeit (9) als thermostatisierbare Glasschale ausgeführt ist.

6. Vorrichtung nach einem der vorhergehenden Ansprüche, **dadurch gekennzeichnet, daß** die Schüttgutaufnahme (1) als mit einem feinmaschigen Netz (13) abgeschlossenes Rohr ausgeführt ist.

7. Vorrichtung nach einem der vorhergehenden Ansprüche, **dadurch gekennzeichnet, daß** die Vakuumkammer (17) als Glashaube (19) ausgeführt ist.

8. Vorrichtung nach einem der Ansprüche 1 bis 6, **dadurch gekennzeichnet, daß** die Vakuumkammer (17) als ein eine Tür aufweisender Vakuumkasten (57) ausgeführt ist.

9. Vorrichtung nach einem der vorhergehenden Ansprüche, **dadurch gekennzeichnet, daß** die Einrichtung (3) zur Ermittlung der Gewichtszunahme und gegebenenfalls auch die Motorgetriebeeinheit (27) mit einer Steuer- und Auswerteeinheit (37) verbunden sind.

10. Vorrichtung nach einem der vorhergehenden Ansprüche, **dadurch gekennzeichnet, daß** die Schüttgutaufnahme (1) an die Einrichtung (3) zur Ermittlung der Gewichtszunahme gehängt ist.

11. Verfahren zur Bestimmung der Benetzbarkeit von Schüttgütern mit einer Meßflüssigkeit, wobei das Schüttgut der Meßflüssigkeit unter Vakuum ausgesetzt, die Gewichtszunahme des Schüttgutes aufgrund der vom Schüttgut aufgenommenen Meßflüssigkeit bestimmt und die Benetzbarkeit des Schüttgutes rechnerisch ermittelt wird.

## Claims

1. Apparatus for determining the wettability of bulk goods, comprising a bulk goods receiver (1), a receptacle (7) for a measuring fluid (9), a device (3) for determining the increase in the weight of the bulk goods (5) due to the

**EP 1 099 104 B1**

absorbed measuring fluid (9), **characterised in that** the bulk goods receiver (1) and the receptacle (7) for the measuring fluid (9) are arranged together in a vacuum chamber (17).

2. Apparatus according to claim 1, **characterised in that** the device (3) for determining the weight increase is arranged in the vacuum chamber (17).

3. Apparatus according to one of the preceding claims, **characterised in that** the receptacle (7) for the measuring fluid (9) is arranged on a lifting table (29), the height of which can be adjusted by means of a motor gear unit (27).

4. Apparatus according to one of the preceding claims, **characterised in that** the bulk goods receiver (1) and/or the device (3) for determining the weight increase is coupled as a feed unit to a motor gear unit (27).

5. Apparatus according to one of the preceding claims, **characterised in that** the receptacle (7) for the measuring fluid (9) is realised as a thermostatable glass dish.

6. Apparatus according to one of the preceding claims, **characterised in that** the bulk goods receiver (1) is realised as a pipe sealed with a fine-mesh netting (13).

7. Apparatus according to one of the preceding claims, **characterised in that** the vacuum chamber (17) is realised as a glass dome (19).

8. Apparatus according to one of claims 1 to 6, **characterised in that** the vacuum chamber (17) is realised as a vacuum box (57) which has a door.

9. Apparatus according to one *of* the preceding claims, **characterised in that** the device (3) for determining the weight increase and possibly also the motor gear unit (27) are connected to a control and evaluation unit (37).

10. Apparatus according to one of the preceding claims, **characterised in that** the bulk goods receiver (1) is suspended on the device (3) for determining the weight increase.

11. Method for determining the wettability of bulk goods with a measuring fluid, wherein the bulk goods are exposed to the measuring fluid under vacuum, the weight increase of the bulk goods is determined on the basis of the measuring fluid absorbed by the bulk goods and the wettability of the bulk goods is determined by calculation.

**Revendications**

1. Dispositif pour déterminer la mouillabilité de produit en vrac comprenant un réceptacle (1) pour recevoir le produit en vrac, un réceptacle (7) pour recevoir un liquide de mesure (9), une installation (3) pour déterminer l'augmentation de poids du produit en vrac (5) du fait de l'absorption de liquide de mesure (9),
**caractérisé en ce que**
le réceptacle de produit en vrac (1) et le réceptacle (7) de produit de mesure (9) sont placés en commun dans une chambre à vide (17).

2. Dispositif selon la revendication 1,
**caractérisé en ce que**
l'installation (3) pour déterminer l'augmentation de poids est placée dans la chambre à vide (17).

3. Dispositif selon l'une quelconque des revendications précédentes,
**caractérisé en ce que**
le réceptacle (7) de liquide de mesure (99) est placé sur une table élévatrice (29) réglable en hauteur, actionnée par un groupe moto-réducteur (27).

4. Dispositif selon l'une quelconque des revendications précédentes,
**caractérisé en ce que**
le réceptacle à produit en vrac (1) et/ou l'installation (3) pour déterminer l'augmentation de poids sont couplés à un groupe moto-réducteur (27) pour constituer une unité de déplacement.

8

**5.** Dispositif selon l'une quelconque des revendications précédentes,
**caractérisé en ce que**
le réceptacle (7) de liquide de mesure (9) est réalisé en forme de coupe en verre thermostatée.

**6.** Dispositif selon l'une quelconque des revendications précédentes,
**caractérisé en ce que**
le réceptacle (1) de produit en vrac est réalisé sous la forme d'un tube fermé par un filet à mailles fines (13).

**7.** Dispositif selon l'une quelconque des revendications précédentes,
**caractérisé en ce que**
la chambre à vide (17) est une cloche en verre (19).

**8.** Dispositif selon l'une quelconque des revendications 1 à 6,
**caractérisé en ce que**
la chambre à vide (17) est un caisson à vide (57) muni d'une porte.

**9.** Dispositif selon l'une quelconque des revendications précédentes,
**caractérisé en ce que**
l'installation (3) pour déterminer l'augmentation de poids et le cas échéant également le groupe moto-réducteur (27) est relié à une unité de commande et d'exploitation (37).

**10.** Dispositif selon l'une quelconque des revendications précédentes,
**caractérisé en ce que**
le réceptacle à produit en vrac (1) est suspendu à l'installation (3) déterminant l'augmentation de poids.

**11.** Procédé pour déterminer la mouillabilité de produit en vrac avec un liquide de mesure selon lequel on soumet le produit en vrac au liquide de mesure, sous vide, on détermine l'augmentation de poids du produit en vrac par l'absorption de liquide de mesure qu'il reçoit et on détermine la mouillabilité du produit en vrac en procédant par le calcul.

Fig.1

Fig. 2

Fig.3

Fig. 4

EP 1 099 104 B1

Fig. 5

Fig. 6

Fig. 7

Fig. 8

Fig. 9

EP 1 099 104 B1